# EUROPEAN PATENT APPLICATION

(11) **EP 0 580 232 A1**
(43) Date of publication of application: **26.01.1994**
(21) Application number: 93202091.0
(22) Date of filing: 16.07.1993
(51) Int. Cl.: A22C 11/02, A23P 1/12

(54) **Machine for the production of encapsulated coextruded sausage-type products**

(30) Priority: 22.07.1992 IT MI920721 U
(71) Applicant: REFIN S.r.l., I-36100 Vicenza (IT)
(72) Inventor: Righele, Giovanni Battista, I-36010 Zane' (Vicenza) (IT)
(74) Representative: Mittler, Enrico

(57) **Abstract**

A description is given of a machine for the production of encapsulated coextruded sausage-type products, comprising two continuous filling pumps (1, 2) for feeding respective mixtures (3, 4) through feed pipes (7, 11) of different section, of which the one with smaller section (11) is partially inserted coaxially in the one with larger section (7), up to a coextrusion structure (32) with the outlet end further forward compared to that of the smaller section pipe (11), and portioning means (17) related to the outlet end of said coextrusion structure (32) for the division of the product into individual portions. The perfect separation between two portions of internal mixture is achieved by means of a device (9) for closing the smaller section pipe (11) designed to ensure the immediate stop of the emission of the internal mixture (4) during pauses in the feeding of the internal mixture (4).

## Description

The present invention relates to a machine for the production of encapsulated coextruded sausage-type products.

Filling machines are known which essentially comprise a rotary pump fitted with a feed hopper generally fitted with a stirrer, into which a minced meat mixture is poured, and with a feed pipe which conveys the mixture into an external casing and, together with the latter, towards special portioning devices. For some non-traditional products the external casing is not necessary so that the feed pipe supplies the mixture directly to the portioning devices.

The purpose of the portioning devices, generally consisting of plier systems which choke the product at predetermined intervals, is to divide the product into regular portions, whose dimensions are determined by market demands.

Current market trends require the production of non-traditional sausage-type products. More particularly there is appreciable demand for sausage-type products which consist of two different mixtures of minced meat which remain separate inside the end product. In these products, which are generally designated by the term coextruded sausage-type products, the two mixtures assume a coaxial arrangement inside the end product, so that a first mixture forms an external layer covering an internal layer, consisting of the second mixture.

Present market demands tend above all towards encapsulated coextruded sausage-type products, whose peculiar feature lies in the fact that the mixture forming the internal layer of the product is fully closed off, even as regards the end surfaces, from the mixture forming the external layer.

From the point of view of production, coextruded sausage-type products can be obtained by adopting filling machines similar to those mentioned, but instead used in pairs and fitted with modified systems for feeding the mixture. In particular it is necessary that said feed systems convey the two mixtures produced into the two filling machines in a single structure in which the final coextruded product can be formed.

For this purpose the two filling machines are fitted with feed pipes of different section, arranged in such a way that the smaller section pipe is partially inserted coaxially inside the larger section one.

By this technique one of the two mixtures (the one fed by the smaller section pipe) is thus injected into the cavity produced in the mixture fed by the larger section pipe following insertion of said smaller section pipe into the larger section one.

As regards the production of encapsulated coextruded sausage-type products, the known technique consists in the construction of machinery which is identical to that described above, although with the smaller section feed pipe ending in a slightly backward position compared to the one with larger section.

By periodically interrupting the feed of mixture to the smaller section feed pipe, the part of the internal mixture which has already come out the smaller section pipe is detached and continues to be carried along by the external mixture, whose feed continues without interruptions and tends to occupy also the volume left vacant by the halt in feeding of the internal mixture by the smaller section pipe. The coextruded product obtained in this way finally also comes out of the larger section feed pipe and is ready for portioning, which occurs by choking the outlet mouth of the latter.

The encapsulated coextruded sausage-type products produced by the technique described have a shape which is not completely regular; more particularly the shape of the internal mixture is irregular, its section decreasing at the end of the product itself, rather than remaining constant as would be desirable. More particularly it may occur that the irregularity in the shape is such that it does not allow full encapsulation, so that part of the internal mixture is in contact with the external environment.

This difficulty is extremely undesirable in the case of coextruded sausage-type products containing a fluid product in the internal layer or one which may become such following melting during possible cooking of the product itself.

In this case the irregularities in shape may cause the internal mixture to come out, and hence to disperse.

The irregularity in the shape of the internal mixture is linked to the mechanism of detaching the individual portions of the mixture fed by the smaller section pipe, which does not cause a clean separation between the various portions.

The object of the present invention is to provide a machine which enables encapsulated coextruded sausage-type products to be obtained whose internal mixture is perfectly regular in shape, by introducing adequate detaching mechanisms for the individual portions of internal mixture.

In accordance with the invention this object is achieved by means of a machine for the production of encapsulated coextruded sausage-type products, comprising two continuous filling pumps for feeding respective mixtures through feed pipes of different section, of which the one with smaller section is partially inserted in a coaxial position in the one with larger section up to a coextrusion structure with the outlet end further forward compared to that of the one with smaller section, and portioning means related to the outlet end of said coextrusion structure for dividing the product into individual portions, characterised in that it is fitted it a device for closing the smaller section pipe designed to stop immediately the emission of the internal layer during pauses in feeding the internal mixture.

It is clear that total closure of the smaller section feed pipe enables a clean detachment to be achieved between the various portions of the internal mixture and, consequently, a considerable regularity in the shape of the finished product.

These and other features of the present invention will be made clearer by the following detailed description of its embodiment, illustrated by way of a non-limiting example in the following drawings, in which:
figure 1 shows schematically in horizontal section a filling machine according to the invention, represented during a pause in production;
figure 2 shows the portioning and closure devices of the abovementioned machine seen from the left in relation to figure 1;
figure 3 shows the same devices of figure 2, sectioned vertically along line III-III of figure 2;
figure 4 shows the same filling machine, again in horizontal section, during a production phase of coextrusion of the two mixtures;
figure 5 shows the portioning and closure devices seen from the left in relation to figure 6;
figure 6 shows the same devices, sectioned along line VI-VI of figure 5;
figure 7 shows the same machine at the end of extrusion of the internal mixture;
figure 8 shows the portioning and closure devices seen from the left in relation to figure 7;
figure 9 shows the same devices, sectioned along line IX-IX of figure 8;
figure 10 shows the same filling machine, during portioning of the coextruded sausage-type product;
figure 11 shows the portioning and closure devices seen from the left in relation to figure 10;
figure 12 shows the same devices of figure 11, sectioned along line XII-XII of figure 11;
figure 13 shows an enlarged detail of the closure device, in vertical axial section as in figures 3, 6, 9 and 12;
figure 14 shows the same detail seen from the left in relation to figure 13;
figure 15 shows the same detail, sectioned horizontally along line XV-XV of figure 13;
figure 16 shows the same device seen from the right in relation to figure 13.

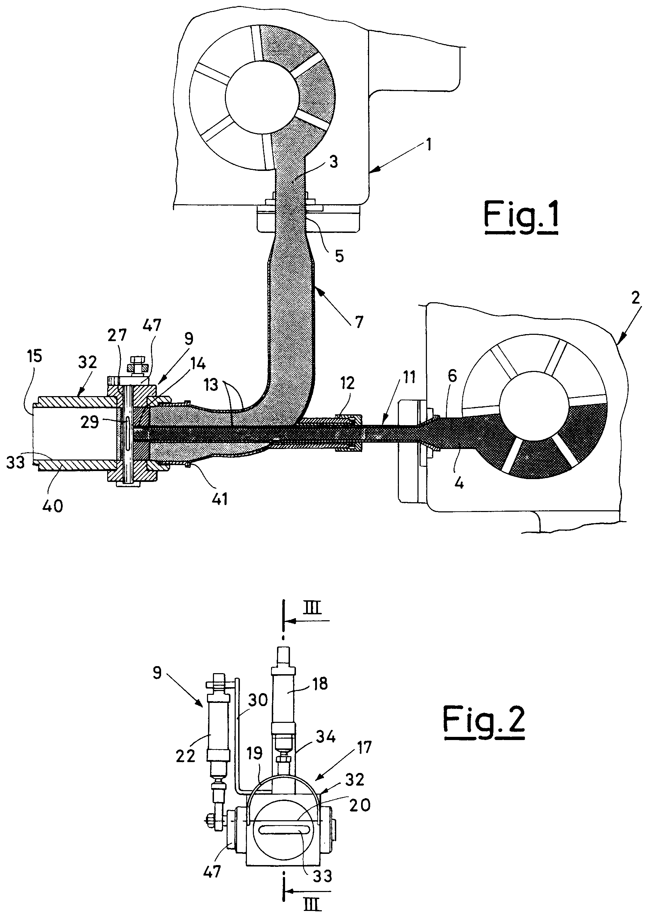

With reference to figure 1, a filling machine for encapsulated coextruded products according to the invention, provided for example for products with a flattened shape, comprises a pair of continuous filling pumps 1 and 2, each of which pushes a relative mixture 3, 4 towards a respective outlet mouth 5, 6.

The first 5 of said outlet mouths is connected to one end of a pipe 7 for feeding the mixture 3. This pipe is inserted rigidly at the other end in a coextrusion structure 32.

The second 6 of said outlet mouths is connected to a feed pipe 11 with a smaller section compared to the feed pipe 7.

Said feed pipe 11 is inserted, through a support and guide mouth 12, in the abovementioned feed pipe 7, in such a way that the two abovementioned feed pipes 7 and 11 are arranged coaxially for a common path section 13, ending in said coextrusion structure 32.

One outlet end 14 of the smaller section feed pipe 11 is related to a closure device 9 of the smaller section pipe 11, inserted in a special cavity of the structure 32, with which it is integral and which divides into two inlet 41 and outlet 40 portions.

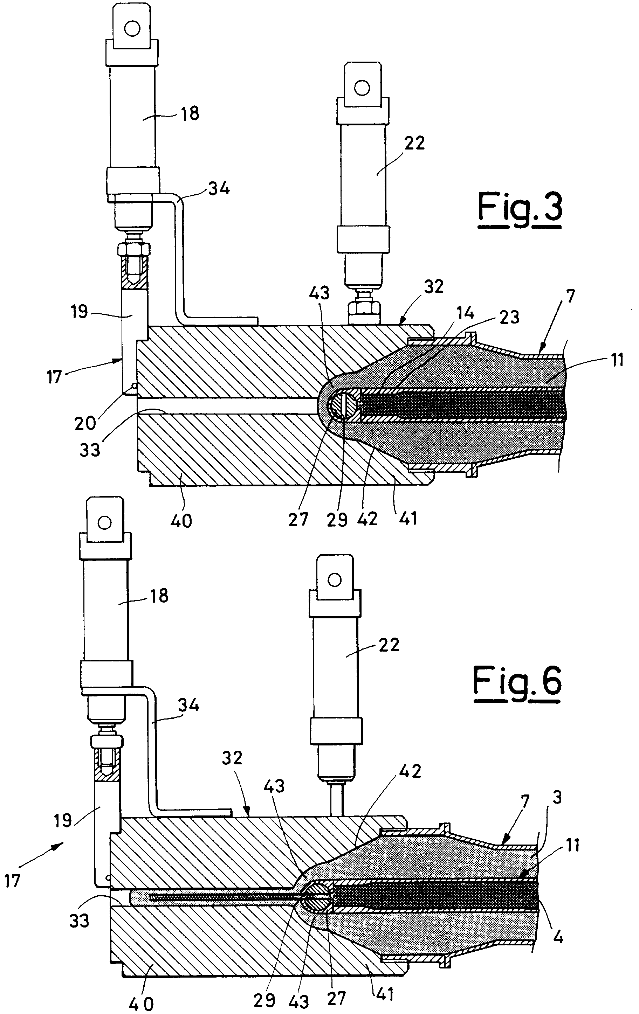

The first 41 of said portions has profiles 42 (figure 3) designed to convey the external mixture 3 to the second portion 40 through a passage 43 whose height is considerably lower in relation to the feed pipe 7. This passage 43 communicates with a roughly rectangular slot 33 formed inside the portion 40 of the coextrusion structure 32, whose dimensions and shape determine the dimensions and shape of the coextruded product.

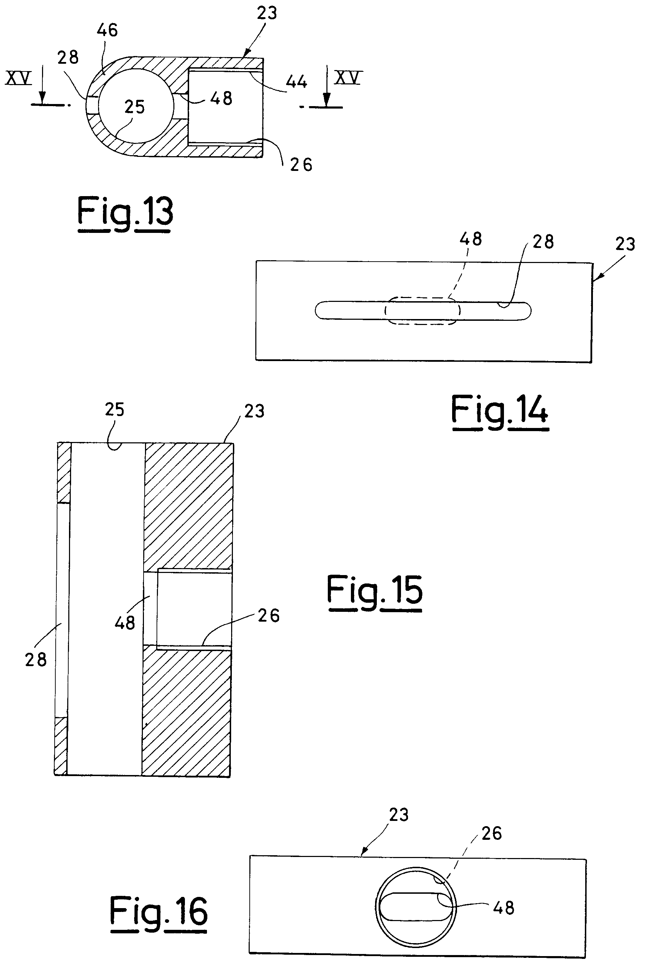

With reference to figures 2 and 3 (as also to figures 13-16), the closure device 9 comprises a main body 23 with a parallelepiped shape, fitted with a circular threaded inlet hole 26 designed to house and screw lock the abovementioned feed pipe 11, which for this purpose is fitted with a corresponding external threading.

On the opposite side in relation to the abovementioned inlet hole 26, the main body 23 has a rounded portion 46 (figure 13) with an axial hole 25 passing through it, said hole arranged perpendicularly to the abovementioned hole 26 and designed to house a rotary shaft 27 (figs. 1 and 3). The hole 26 and the hole 25 communicate through a roughly rectangular slot 48 whose width is equal to the diameter of the abovementioned hole 26 and whose height is considerably smaller compared to the abovementioned diameter (figure 16).

The abovementioned rotary shaft 27 has a roughly rectangular slot 29 through it which cuts the shaft 27 along a diameter of its section. In a similar manner, an outlet slot 28, similar in shape to the slot 29 and also arranged parallel to the rotary shaft 27, is formed on the rounded body 46. This outlet slot 28 is arranged in alignment with the abovementioned inlet slot 48.

The rotary shaft 27 is driven by a pneumatic cylinder 22, acting eccentrically on a disk 47 coaxially integral with said shaft 27. The cylinder 22 is moreover rigidly connected to the structure 32 by means of a support 30.

One end of the outlet 15 of the end portion 40 of the coextrusion structure 32 is related to a portioning device 17, used to divide the coextruded product into individual portions (figures 2 and 3).

The portioning device 17 comprises a slicer 19 ending in a wire 20 designed to separate two different portions. In this case too, the device 17 is actuated by a pneumatic cylinder 18, rigidly attached to the structure 32 by a support 34.

The filling machine for encapsulated coextruded products and shown in the drawings functions as follows.

Consideration is made first of all of the configuration assumed by the machine during a pause in production, represented by figures 1, 2 and 3. In this configuration the two pumps 1 and 2, used to feed the mixtures 3 and 4 respectively, are both at rest. The mixtures 3 and 4 are contained in respective feed pipes 7 and 11.

In the area in which the smaller section feed pipe 11 is inserted in the one with larger section 7, the mixture 3, conveyed by the feed pipe 7, is arranged inside the smaller section pipe 11, in such a way that, in the external mixture 3, a cavity is produced whose shape depends on the shape and dimensions of the internal feed pipe 11.

The external mixture 3, moreover, also occupies the final part of the portion 41 of the structure 32, positioned downstream of the closure device 9 of the feed pipe 11. The manner in which this condition is achieved and the relevant reasons will be made clearer hereinunder.

In this rest configuration the outlet end of the smaller section feed pipe 11 is completely closed by the closure device 9. The slot 29 which passes through the shaft 27 is in fact positioned transversely to the feed pipe 11, so that the latter is completely blocked by the lateral surface of the shaft 27 itself, as can be seen better in figure 3.

The portioning device 17 is also in a rest condition, as shown in figure 2.

The production of encapsulated coextruded sausage-type products begins, starting from the configuration described above, by the actuation and feeding of minced meat to the two pumps 1 and 2, which start up in succession and push the mixture into pipes 7 and 11 respectively.

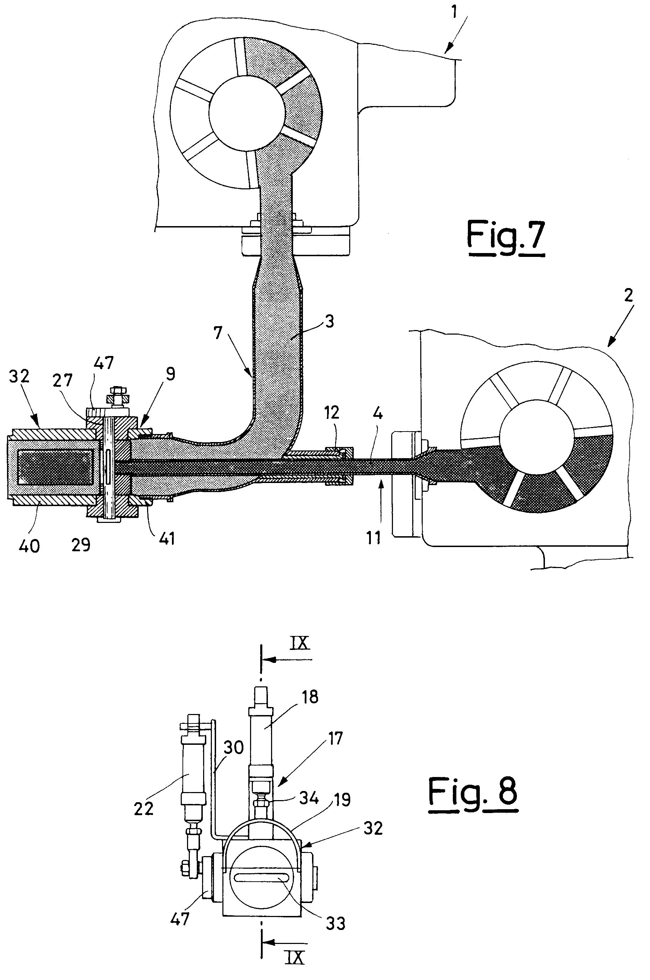

At the same time as the pump 2 is actuated, the pneumatic cylinder 22 is actuated to cause rotation of the rotary shaft 27, to bring the slot 29 in correspondence with the end part of the feed pipe 11 on one side, and with the outlet slot 28 of the closure device 9 on the other side (figure 6).

In this way therefore, the internal mixture 4 is also free to go beyond the closure device 9, crossing the aligned slots 48, 29 and 28, to be fed finally into the portion 40 of the coextrusion structure 32. The simultaneous feed of the two mixtures 3 and 4 enables them to be coextruded.

In this respect it is important to remember that, on the basis of the situation of the initial configuration, the external mixture 3 alone forms the first part of the product since, as mentioned previously, this external mixture 3 already occupied initially (figure 1) part of the portion 40 of the coextrusion structure 32 (figure 7).

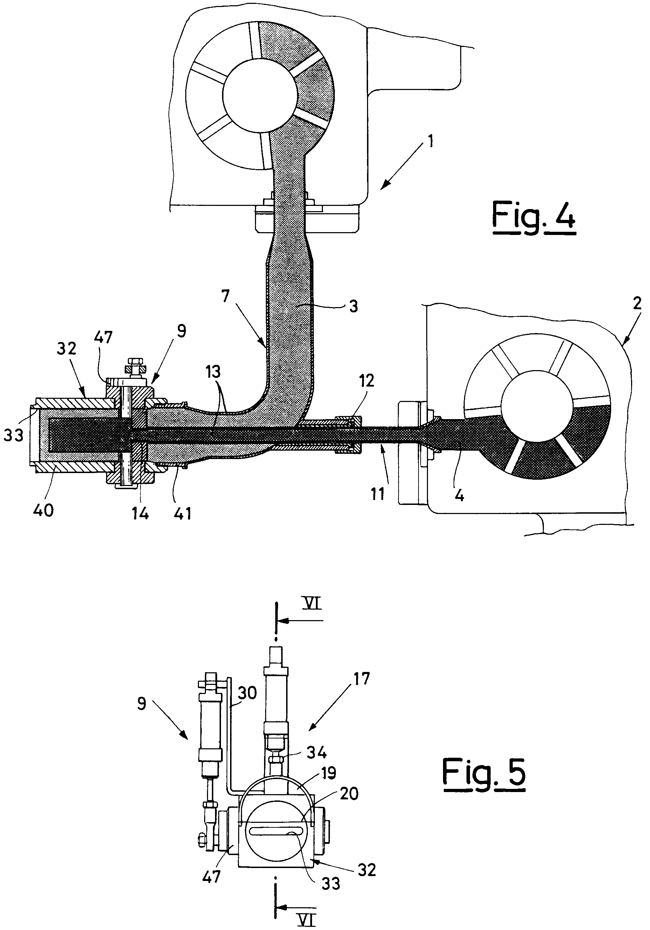

As shown particularly by figure 5, the portioning device 17 still remains in rest conditions.

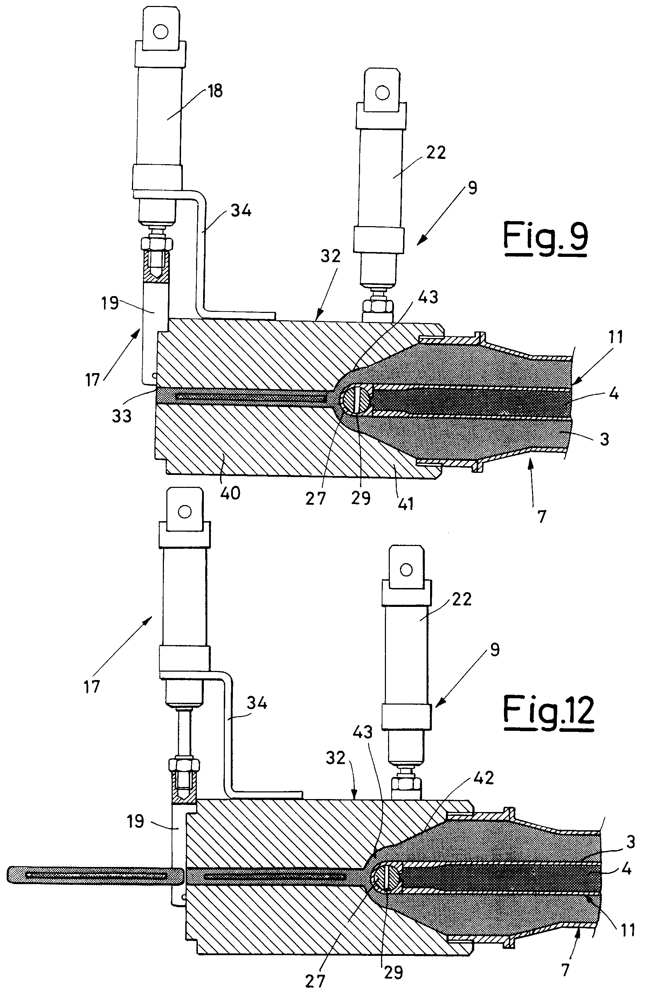

The coextrusion of the two mixtures 3 and 4 then proceeds without variations for a predetermined period of time so as to allow feeding of a fixed quantity of internal mixture 4. After this period of time, on one side, feeding of the mixture by the pump 2 ends. At the same time, so as to allow a clean detachment between the portion which has already come out and the next one, the closure device 9 is actuated so as to close the smaller section feed pipe 11 again. For this purpose the pneumatic cylinder 22 causes the rotary shaft 27 to rotate again, until it returns it to the original condition, in which the slot 29 is no longer aligned with the slots 48 and 28 (figure 9).

The external mixture 3, conversely, continues to be fed, returning to occupy the space left vacant due to the internal mixture 4 not being fed (figures 7 and 9). This provides the guarantee that the final part of the coextruded sausage-type product is composed fully of the mixture 3 and therefore completes the encapsulation operations.

The duration of the pause in feeding is chosen so as to ensure, in addition to the formation of an end covering layer of dimensions equal to those of the initial layer, also the return to the original conditions for the production of the successive sausage-type product, i.e. the formation of a layer of the mixture 3 at the outlet of the closure device 9, which is to form the initial covering surface for the subsequent sausage-type product (figure 1). Having achieved this condition, the production cycle can start again.

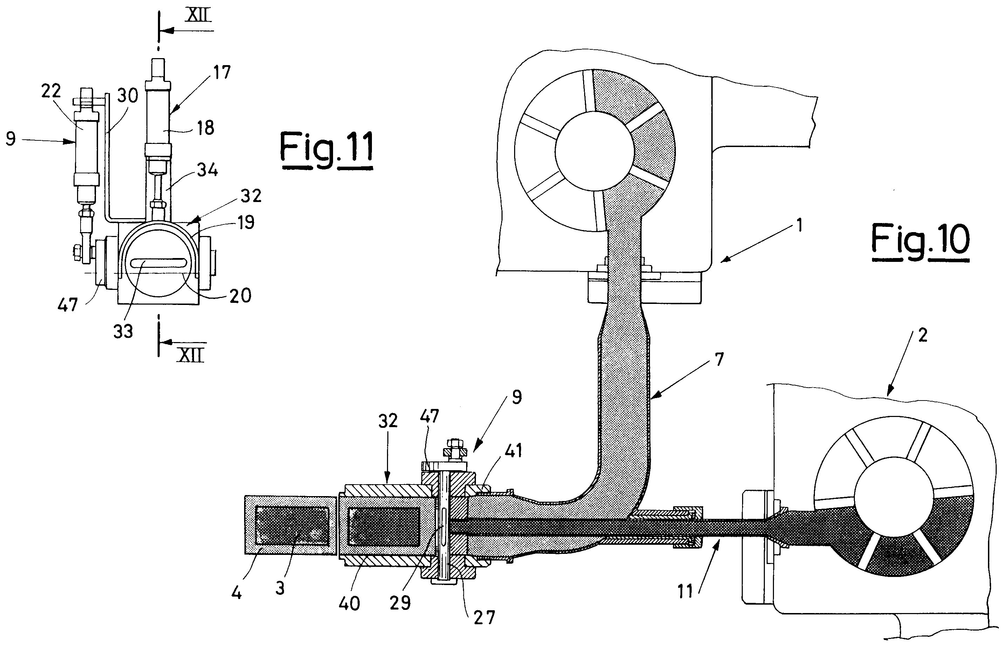

It should be noted that the emission of a sausage-type product from the coextrusion structure 32 is correlated to the production of a subsequent sausage-type product which pushes the previous one, gradually taking its place inside the coextrusion structure 32 (figures 10 and 12).

As far as the portioning device 17 is concerned, it is still inactive, as shown in figure 8, and comes into operation only when the end covering layer of the coextruded sausage-type product reaches a sufficient size and exits completely, pushed by the subsequent product, from the structure 32.

The moment in which portioning is to take place is once again determined previously on the basis of the times scheduled for the production of a single sausage-type product. Portioning is carried out by actuating the pneumatic cylinder 18, which causes the vertical displacement of the wire slicer 19. The wire 20, moving rapidly, is thus able to cause the separation of the two sausage-type products (figures 10, 11, 12).

It should be noted that the shape and dimensions of the end product are determined on the basis of the shape of the slots 28 and 29, as regards the internal layer, and of the slot 33 as regards the external layer. By varying the shape of said slots, it is therefore possible to achieve sausage-type products of different shapes.

## Claims

1. Machine for the production of encapsulated coextruded sausage-type products, comprising two continuous filling pumps (1, 2) for feeding respective mixtures (3, 4) through feed pipes (7, 11) of different section, of which the smaller section pipe (11) is partially inserted in a coaxial position in the larger section pipe (7) up to a coextrusion structure (32) with an outlet end (15) further forward compared to that (14) of the smaller section pipe (11), and portioning means (17) related to said coextrusion structure (32) for the division of the product into individual portions, characterised in that it is fitted with a device (9) for closing the smaller section pipe (11), designed to ensure the immediate stop of the emission of the internal mixture (4) during pauses in the feeding of the internal mixture (4).

2. Machine according to claim 1, characterised in that said closure device (9) comprises a main body (23) provided with an inlet hole (26) designed to house an end portion (14) of the abovementioned smaller section feed pipe (11), with a transverse hole (25) designed to house a rotary shaft (27) provided with a diametral slot (29) and an outlet slot (28) aligned with said inlet hole (26) and communicating or otherwise with it through said diametral slot (29) according to the angular position of said rotary shaft (27).

3. Machine according to claim 1, characterised in that said portioning device (17) comprises a wire slicer (19) driven by a pneumatic cylinder (18), actuated at predetermined time intervals.
